# EUROPÄISCHE PATENTSCHRIFT

(11) **EP 3 500 091 B1**
(45) Veröffentlichungstag und Bekanntmachung des Hinweises auf die Patenterteilung: **18.10.2023**
(21) Anmeldenummer: 17742238.3
(22) Anmeldetag: 20.07.2017
(51) Int. Cl.: A01J 5/04

(54) **VORRICHTUNG ZUR ZUSAMMENFÜHRUNG VON MILCHSTRÖMEN UND VERFAHREN ZUR VERWENDUNG DER VORRICHTUNG**
DEVICE FOR JOINING MILK FLOWS AND METHOD FOR USING SAID DEVICE
DISPOSITIF POUR FAIRE CONVERGER DES FLUX DE LAIT ET PROCÉDÉ D'UTILISATION DU DISPOSITIF

(30) Priorität: 19.08.2016 DE 102016215634
(43) Veröffentlichungstag der Anmeldung: 26.06.2019
(73) Patentinhaber: Maier, Jakob, 86842 Türkheim (DE); Hatzack, Wilfried, 86842 Türkheim (DE)
(72) Erfinder: Maier, Jakob, 86842 Türkheim (DE); Hatzack, Wilfried, 86842 Türkheim (DE)
(74) Vertreter: Grünecker Patent- und Rechtsanwälte PartG mbB
(86) Internationale Anmeldenummer: PCT/EP2017/068326
(87) Internationale Veröffentlichungsnummer: WO 2018/033339

(56) Entgegenhaltungen:
- EP-A1- 2 524 591
- WO-A1-2014/098752
- DD-A- 86 709
- DE-A1- 2 810 087
- GB-A- 2 021 379
- GB-A- 2 191 076

## Beschreibung

Die vorliegende Erfindung betrifft allgemein das Gebiet der Melktechnik und insbesondere die Ableitung von Milch aus dem Euter von Tieren während des Melkvorgangs.

Auf dem Gebiet der Agrartechnik ist es üblich beim Melken von Milchtieren, etwa von Kühen, Schafen, Ziegen, und dergleichen, eine Melkanlage einzusetzen, mit der der Milchentzug aus dem Euter des zu melkenden Tieres in mehr oder minder automatisierter Weise erfolgt. Unabhängig von dem Grad der Automatisierung der verwendeten Melkanlage ist in der Regel ein Melkbecher mit einer Zitze des zu melkenden Tieres zu verbinden, der typischerweise eine geeignete flexible Einlage bzw. Aufnahme- auch als Zitzengummi bezeichnet - aufweist, die unmittelbar mit der Zitze in Kontakt tritt und einen Kanal bildet, der mit dem Strichkanal der Zitze in Verbindung ist, um damit Milch aus der Zitze und somit aus einem entsprechenden Euterteil abzuführen. Bei den heute üblichen Melktechniken wird dabei die elastische Einlage, die beispielsweise aus Silikon hergestellt ist, periodisch von außen mit Druck beaufschlagt, so dass eine "Einfaltung" der elastischen Einlage erfolgt, so dass damit in etwa eine Nachbildung des Saugverhaltens eines Jungtieres möglich ist. Die Häufigkeit und die Dauer dieser Einfaltung der flexiblen Einlage hängt von tierspezifischen Gegebenheiten ab und kann beispielsweise im Bereich von 40 Einfaltungen bis 120 oder mehr Einfaltung ein pro Minute liegen.

In den Phasen, in denen die flexible Einlage des Melkbechers nicht eingefaltet ist, also ein maximal ungehinderter Strömungsweg für die Milch vorhanden ist, fließt diese Milch über die flexible Einlage in einen nachgeordneten Milchschlauch, der seinerseits in typischen Melkanlagen in ein relativ großvolumiges Milchsammelstück mündet, aus welchem die Milch über einen weiteren Schlauch oder eine Leitung in eine größere Milchleitung fließt (siehe z.B. GB2021379A), in der die Milch mehrerer Melkzeuge zusammengeführt und zu einem Milchsammelbehälter transportiert wird. Beim Melkvorgang wird also zunächst ein Melkbecher mit einer entsprechenden flexiblen Einlage an eine jeweilige Zitze angelegt, typischerweise von einem Melker, wobei das Anhaften des Melkbechers auf der Grundlage eines Betriebsunterdrucks gewährleistet ist, der anlagenspezifisch und tierspezifisch eingestellt ist. Nach dem Ansetzen der Melkbecher beginnt der eigentliche Melkvorgang, der etwa eine Stimulationsphase beinhalten kann, in der wenig oder gar keine Milch ermolken wird, indem beispielsweise die Länge der Einfaltphase der flexiblen Einlage des Melkbechers entsprechend verlängert wird.

Während des Melkvorgangs kann aus diversen Gründen, etwa aufgrund von Bewegungen des Tiers, etwa durch Abschlagen eines Melkbechers, aufgrund eines übermäßig hohen Milchflusses und des dadurch hervorgerufenen Abfalls des Betriebsunterdrucks, usw. ein Melkbecher abfallen. Dieser Zustand kann insbesondere bei größeren Melkanlagen, d.h. bei Anlagen, in denen viele Tiere gleichzeitig gemolken werden, über einen längeren Zeitraum unbemerkt bleiben, was zu nachteiligen Auswirkungen führen kann. Beispielsweise ist es problematisch, dass der abgefallene Melkbecher weiterhin mit dem Betriebsunterdruck verbunden ist, so dass zum einen die zugehörige Vakuumpumpe aufgrund des Lufteinbruchs eine größere Leistung erbringen muss oder zumindest ein entsprechendes Regelventil diesen zusätzlichen Lufteinbruch ausgleichen muss, um möglichst stabile Bedingungen für die anderen Melkbecher und weiteren Werkzeuge aufrechtzuerhalten. Dies kann beim gleichzeitigen Melken mehrerer Tiere, insbesondere wenn diese besonders unruhig sind, bereits zu problematischen Schwankungen des Betriebsunterdrucks und somit zu ungleichmäßigen Bedingungen für den Melkvorgang führen. Ein weiterer schwerwiegender Nachteil, der durch den Abfall eines Melkbechers hervorgerufen wird, besteht darin, dass aufgrund der weiter bestehenden Verbindung mit dem Betriebsunterdruck ständig eine Saugwirkung vorhanden ist, die dazu führt, dass Fremdstoffe, etwa Stroh, Fäkalien, usw. in den Melkbecher, d.h. in die flexible Einlage, eintreten und gegebenenfalls bis zur Milchleitung vordringen können. Insbesondere ist es in vielen aktuell eingesetzten Melkanlagen nicht möglich bzw. nicht vorgesehen, die Melkbecher nach jedem einzelnen Melkvorgang zumindest im oberen Bereich zu reinigen, so dass insbesondere eine Verschmutzung, die aufgrund des Becherabfalls mit erhöhter Wahrscheinlichkeit auftritt, eine gesundheitliche Beeinträchtigung der Zitzen auch der nachfolgenden zu melkenden Tiere nach sich ziehen kann. Ferner steigt durch die eintretenden Fremdstoffe die Gefahr einer Verschmutzung der Milch mit einhergehender Keimbildung stark an, so dass die gesamte Milchqualität beeinträchtigt werden kann, was zusätzlich zu negativen Auswirkungen einer generell verminderten Hygiene auch deutliche ökonomische Nachteile für den milchproduzierenden Betrieb mit sich bringt, da die Qualität der abgelieferten Milch ein Faktor für den erzielten Milchpreis ist.

Aufgrund der zuvor erläuterten Situation ist es eine Aufgabe der vorliegenden Erfindung, Mittel bereitzustellen, in denen die Auswirkungen eines Becherabfalls während eines Melkvorgangs reduziert werden.

Gemäß einem Aspekt der vorliegenden Erfindung wird die zuvor genannte Aufgabe gelöst durch eine Vorrichtung zur Zusammenführung von Milchströmen nach Anspruch 1.

Erfindungsgemäß wird also eine Vorrichtung bereitgestellt, die geeignete Strömungskanäle enthält, um eine effiziente Ableitung der ermolkenen Milch zu ermöglichen, ohne dass dabei größere Strömungsverluste, d.h. Strömungswiderstände, auftreten, die üblicherweise in einem herkömmlichen Milchsammelstück zu beobachten sind, da dort häufig entsprechende Raumbereiche zum Sammeln von Milch vorgesehen sind. D.h., durch das Vorsehen des ersten und des zweiten Strömungskanals, die jeweils in dem dritten Strömungskanal zusammenlaufen, ergibt sich eine effiziente Ableitung der Milch, so dass auch hohe Milchflüsse ohne negative Beeinflussung des gesamten Melkvorgangs, insbesondere ohne Vergrößerung der Gefahr eines Becherabfalls aufgrund eines hohen Milchflusses, abtransportiert werden. Ferner ist die Strömungsschalteinrichtung vorgesehen, zuverlässig innerhalb des vorgegebenen Bereichs des Betriebsunterdrucks eine Hemmung der Strömung der Milch in zumindest einem der Strömungskanäle auszuführen, wenn dort ein Druckausgleich zur Atmosphäre erfasst wird. D.h., wenn ein Melkbecher während des Melkvorgangs abfällt oder auch in einer Phase, in der bereits der Betriebsunterdruck der Anlage an den Melkbechern anliegt, die Melkbecher aber noch nicht angesetzt sind, wird eine zuverlässige Hemmung der Strömung in dem entsprechenden Strömungskanal bewerkstelligt. Wenn andererseits ein Unterdruck in dem entsprechenden Strömungskanal erfasst wird, was beim Melken einem Zustand entspricht, in welchem der Melkbecher an der Zitze anliegt, wird die Hemmung aufgehoben und ein gewünschter Milchentzug kann stattfinden.

Durch die erfindungsgemäße Vorrichtung wird einerseits eine Stabilisierung des gewünschten Betriebsunterdrucks erreicht, da beispielsweise bereits beim Ansetzen der Melkbecher ein unerwünschter Lufteinbruch in das Betriebsvakuum vermieden wird, solange ein jeweiliger Melkbecher noch nicht mit der Zitze mechanisch gekoppelt ist. Durch diese Stabilisierung wird somit der Melkvorgang bei einem Tier nicht durch das Ansetzen der Melkbecher bei einem weiteren Tier oder an einer weiteren Zitze desselben Tiers beeinflusst. Auch beim Abfall eines Melkbechers während des Melkens wird eine Stabilisierung des Betriebsunterdrucks erreicht, da kein wesentlicher Lufteinbruch erfolgt, da bereits kurz nach dem Lösen des Melkbechers von der Zitze die zuverlässige Hemmung der Strömung durch die erfindungsgemäße Strömungsabschalteinrichtung bewirkt wird. Durch die fehlende Saugwirkung bei einem auf dem Boden liegenden abgefallenen Melkbecher ergibt sich auch ein deutlich geringerer Grad an Verunreinigung, so dass die Auswirkungen hinsichtlich einer Beeinträchtigung der Eutergesundheit und Milchqualität deutlich verringert werden.

In einer vorteilhaften Ausführungsform ist die Strömungsschalteinrichtung ausgebildet, den dritten Strömungskanal druckabhängig zu schalten. D.h., bei Druckausgleich in dem dritten Strömungskanal oder in einem dem dritten Strömungskanal vorgeordneten Bereich, also in dem ersten und/oder zweiten Strömungskanal, wird in diesem dritten Strömungskanal die Strömung gehemmt und somit der Milchfluss im Wesentlichen unterbrochen, wobei dies beispielsweise ausgelöst wird, wenn einer der Melkbecher abfällt, die mit dem ersten und dem zweiten Strömungskanal verbunden sind. Somit wird bei Lufteinbruch aufgrund des Abfalls eines einzelnen Melkbechers die Strömung im dritten Strömungskanal gehemmt und damit im Wesentlichen unterbrochen, so dass auch in dem anderen nicht abgefallenen Melkbecher ein allmählicher Abbau des Betriebsunterdrucks und schließlich ein Abfall des Bechers erfolgen. Auf diese Weise wird bei Abfall eines einzelnen Bechers eine möglichst "symmetrisierende" Wirkung auf den Gesamtmelkvorgang, zumindest in Bezug auf die beiden genannten Melkbecher, erreicht. Bei Tieren, die lediglich über zwei Zitzen verfügen, wird auf diese Weise eine unsymmetrische Leerung des Euters bei Melkbecherabfall vermieden.

In einer weiteren vorteilhaften Ausführungsform ist die Strömungsschalteinrichtung ausgebildet, den ersten und den zweiten Strömungskanal jeweils druckabhängig und unabhängig voneinander zu schalten. In dieser Ausführungsform kann also ein Melkbecherabfall individuell erfasst und die entsprechende Strömung entsprechend gehemmt werden, ohne dass der Milchentzug in dem anderen Melkbecher beeinflusst wird. Dieser Aufbau ist vorteilhaft in Situationen, in denen eine möglichst kurze Dauer des Melkvorgangs Priorität hat und eine möglicherweise geringfügig unterschiedliche Ausmelkung einzelner Euterbereiche wenig Einfluss auf die Eutergesundheit ausübt, etwa wenn mehrere Male pro Tag gemolken wird und ein vollständiges und/oder gleichmäßiges Ausmelken nicht benötigt oder gewünscht wird.

In einer vorteilhaften Variante weist die Strömungsschalteinrichtung einen Strömungsabschnitt und einen darin beweglich angeordneten Dichtkörper in dem mindestens einen Strömungskanal auf. Durch den in dem betreffenden Strömungskanal vorgesehenen Strömungsabschnitt lässt sich in Verbindung mit dem Dichtkörper eine konstruktiv einfache Anordnung schaffen, die einerseits eine zuverlässige Schaltfunktion ermöglicht, andererseits einen geringen baulichen Aufwand darstellt, wobei gleichzeitig ein möglichst geringer Strömungswiderstand in dem jeweiligen Strömungskanal erzeugt wird. Die Verwendung von möglichst wenigen Komponenten, die insbesondere einen einfachen Aufbau besitzen, ermöglicht auch eine zuverlässige Reinigung nach dem Melkvorgang, so dass keine zusätzlichen Quellen für eine mögliche Keimbildung durch die Komponenten zur Erzielung der Abschaltfunktion eingeführt werden.

Vorzugsweise ist der Dichtkörper als eine Kugel ausgeführt, die insbesondere aus einem lebensmittelneutralen Material hergestellt ist.

In einer weiteren Ausführungsform weist die Strömungsschalteinrichtung ein auf den Druck in dem mindestens einen Strömungskanal reagierendes Federelement auf, das zumindest zeitweise mit dem Dichtkörper in Kontakt tritt. D.h., das Federelement beaufschlagt den Dichtkörper mit Kraft bei Unterdruck in dem jeweiligen Strömungskanal kehrt aber durch die Federwirkung in eine neutrale Lage zurück , so dass sichergestellt ist, dass der Dichtkörper bei normalen Betrieb in der nicht-hemmenden Lage gehalten wird und bei Lufteinbruch eine erforderliche Position zu Hemmung der Strömung einnimmt.

In einer bevorzugten Ausführungsform ist das Federelement eine mit der Außenatmosphäre in Kontakt stehende Membran. Durch die Verwendung einer Membran als Federelement wird eine baulich einfache Komponente bereitgestellt, die über einen langen Zeitraum hinweg gleichbleibende Federeigenschaften bietet und ferner auf der Innenseite mit einer geeigneten Oberfläche versehen ist, so dass ein möglicher Kontakt mit Milch zu keiner Kontamination der Milch führt und gleichzeitig ein gewünschtes Verhalten beim Reinigen der Strömungskanäle gewährleistet. Somit wird die Federwirkung durch die elastischen Eigenschaften der Membran in Verbindung mit der Außenatmosphäre erreicht, wobei die gewünschten elastischen Eigenschaften effizient auf der Grundlage des gewählten Materials, der Materialstärke, der Größe und der allgemeinen Form der Membran einstellbar sind.

In einer bevorzugten Variante beträgt der Bereich des Betriebsunterdrucks 30 kPa bis 55 kPa. Dabei ist diese Angabe als relative Druckangabe zu verstehen, die sich auf die Au-βenatmosphäre bezieht. D.h., ein Betriebsunterdruck von 30 kPa bezeichnet einen Unterdruck in Bezug auf die Außenatmosphäre von 30 kPa, während der Wert von 55 kPa ein höheres "Vakuum", das heißt, einen größeren Druckunterschied in Bezug auf die Außenatmosphäre darstellt. Die Vorrichtung kann also in einem relativ weiten Bereich des Betriebsunterdrucks zuverlässig die Schaltfunktion ausführen, so dass damit die Melkbedingungen vieler Melkanlagen und insbesondere mögliche Schwankungen des Betriebsunterdrucks während des Melkvorgangs berücksichtigt sind.

In einer vorteilhaften Variante ist die Strömungsschalteinrichtung so ausgebildet, dass ihre Schaltfunktion bei einem Durchfluss an Flüssigkeit in dem mindestens einen Strömungskanal im Bereich von 0 kg/Minute bis 6 kg/Minute ausführbar ist. D.h., die Vorrichtung ist so ausgebildet, dass für einen Bereich von 0 Durchfluss, d.h. etwa beim Ansetzen des Melkbechers, bis zu relativ hohen Milchflüssen eine zuverlässige Schaltfunktion gewährleistet ist.

Es sollte beachtet werden, dass eine Messung eines entsprechenden Durchflusses, der durchaus ein pulsierender Durchfluss sein kann, wenn etwa periodisch die flexible Einlage eines Melkbechers zur Einfaltung gebracht wird, wie im einleitenden Teil beschrieben ist, durch Verwendung eines Mengenmessers und einer beliebigen geeigneten Flüssigkeit, etwa Wasser, erfolgen kann. Die quantitative Festlegung dieser Eigenschaft kann dann durch eine geeignete Kombination von Parametern, etwa dem Durchmesser der einzelnen Strömungskanäle, deren Länge, der Beschaffenheit des Dichtkörpers, den Eigenschaften der Membran bzw. des Federelements, und dergleichen erfolgen.

In einer weiteren Variante umfasst die Vorrichtung ferner einen Auslass zur Ankopplung an eine Milchleitung, wobei der Auslass als Modul ausgebildet ist, das mit dem Grundkörper so verbindbar ist, dass eine Strömungsverbindung zwischen dem dritten Strömungskanal und dem Auslass hergestellt wird. D.h., die Vorrichtung ist für die Ableitung der ermolkenen Milch geeignet, wobei insbesondere der modulare Aufbau des Auslasses ein hohes Maß an Flexibilität bei der Anpassung an die bestehende Melkanlage ermöglicht. Beispielsweise können unterschiedliche Durchmesser, Längen, Orientierungen und dergleichen für einen Auslassstutzen des Auslasses bereitgestellt werden, die dann in Abhängigkeit spezieller anlagenspezifische Bedingungen entsprechend mit dem Grundkörper verbunden werden, um das gewünschte Betriebsverhalten zu erreichen.

In einer weiteren vorteilhaften Ausführungsform weist die Vorrichtung ferner eine zweite Strömungsschalteinrichtung auf, die ausgebildet ist, den dritten Strömungskanal der mehreren Strömungskanäle zu schalten, indem bei einem ersten Zustand eines anliegenden Steuersignals die Strömung darin gehemmt und bei einem zweiten Zustand des anliegenden Steuersignals die Hemmung der Strömung aufgehoben wird. Mit dieser weiteren Variante können somit in gesteuerter Weise der dritte Strömungskanal und damit das Ableiten von Milch, aber auch der Rückfluss von Milch aus einer nachgeordneten Milchleitung in besonderen Betriebsphasen im Wesentlichen unterbunden werden. Diese zusätzliche Schaltfunktion kann beispielsweise vorteilhaft genutzt werden, um etwa nach Ende des Melkvorgangs, d.h. nach Abnahme der Melkbecher, ein Zurückströmen von Milch aus der Milchleitung durch die Vorrichtung hindurch und aus den Melkbechern heraus zu verhindern.

In weiteren vorteilhaften Varianten ist die zweite Strömungsschalteinrichtung in Form eines Strömungsabschnitts und eines darin beweglich angeordneten Dichtkörpers in oder nach dem dritten Strömungskanal ausgebildet. Der Dichtkörper der zweiten Strömungsschalteinrichtung ist in einer Variante als Kugel ausgeführt. Ferner weist in einer Ausführungsvariante die zweite Strömungsschalteinrichtung ein Federelement auf, das mit dem Dichtkörper bei Anliegen entweder des ersten Zustands oder des zweiten Zustands des Steuersignals in Kontakt tritt und bei Anliegen des anderen Zustands in seinen Ausgangszustand zurückkehrt. Dies gewährleistet einen konstruktiv einfachen, jedoch sehr zuverlässigen Aufbau.

In einer weiteren Variante ist das Federelement als eine Membran ausgebildet. Dadurch lassen sich die Federeigenschaften auf vielfältige Weise durch Materialauswahl, Materialstärke, Form, Größe der Membran einstellen.

In vorteilhaften Ausführungsformen lässt sich bei ansonsten gleichem Aufbau der Strömungsschalteinrichtung und/oder der zweiten Strömungsschalteinrichtung der Bereich des Betriebsunterdrucks, in welchem eine zuverlässige Schaltfunktion erreicht wird, durch das Federelement einstellen. Wie bereits zuvor erwähnt ist, können sehr unterschiedliche Betriebsbedingungen in unterschiedlichen Melkanlagen vorherrschen, so dass beispielsweise in manchen Betrieben ein relativ geringer Betriebsunterdruck von ca. 30kPa bis zu etwa 40 kPa zur Anwendung kommt, um damit auf tierspezifische Gegebenheiten Rücksicht zu nehmen, während in anderen Systemen ein Betriebsunterdruck im Bereich von 38 kPa und deutlich darüber zur Anwendung kommt. In diesem Falle kann durch Austausch des Federelements eine Anpassung des Arbeitsbereichs der Strömungsschalteinrichtung erreicht werden, um damit den gewünschten Arbeitsbereich abzudecken. Bei Verwendung einer Membran als Federelement kann durch Austausch der Membran in einfacher Weise eine beliebige Anpassung an den gewünschten Arbeitsbereich erreicht werden. Zu diesem Zweck können entsprechende Federelemente oder Membranen mit ansonsten gleicher Baugröße verwendet werden, die sich in ihren elastischen Eigenschaften unterscheiden, so dass durch die unterschiedliche Federkraft eine entsprechende Anpassung an den gewünschten Arbeitsbereich erfolgt. In vorteilhaften Ausführungsvarianten sind daher Federelemente vorgesehen, die einen Arbeitsbereich für ein zuverlässiges Schalten der Strömungsschalteinrichtung von 30 kPa bis 40 kPa, von 36 kPa bis 48 kPa, von 38 kPa bis 50 kPa, von 40 kPa bis 55 kPa, abdecken.

In einer weiteren Ausführungsform ist das Steuersignal durch Einstellung eines Drucks in einer Druckkammer der zweiten Strömungsschalteinrichtung erzeugt. D.h., die Schaltfunktion wird auf der Grundlage zweier unterschiedlicher Druckzustände in der Drucckammer ausgeführt, so dass eine effiziente mechanische Ansteuerung der Schaltfunktion der zweiten Strömungsschalteinrichtung bewerkstelligt werden kann, ohne dass zusätzliche elektrische oder andere Mittel erforderlich sind. Da typischerweise zwei unterschiedliche Druckzustände, etwa der Betriebsunterdruck sowie der Druck der Außenatmosphäre ohnehin verfügbar sind, können diese beiden Druckzustände auch effizient als Steuersignal für die zweite Strömungsschalteinrichtung verwendet werden.

In einer weiteren Ausführungsvariante umfasst die Vorrichtung ein Schaltelement, das ausgebildet ist, bei seiner Betätigung die Schaltfunktion der Strömungsschalteinrichtung ohne Hemmung der Strömung zu blockieren. D.h., das Schaltelement kann zur "Aktivierung" der Strömungsschalteinrichtung verwendet werden. Eine derartige Funktion ist insbesondere vorteilhaft, wenn etwa bei der Reinigung der Melkanlage eine Betriebsphase vorliegt, in der der Unterdruck in der Anlage außerhalb des Betriebsunterdrucks liegt, in welchem die Schalteinrichtung zuverlässig arbeitet, so dass stets eine Strömung möglich ist, ohne ein unerwünschtes Schalten der Strömungsschalteinrichtung auszulösen. Beispielsweise wird typischerweise während des Reinigens der Melkanlage eine relativ hoher Unterdruck eingesetzt, der deutlich höher ist als der Betriebsunterdruck während des Melkens, so dass aufgrund des Schaltelements dennoch ein Strömen der Reinigungsflüssigkeit sichergestellt ist.

Gemäß einem weiteren Aspekt der vorliegenden Erfindung wird die zuvor genannte Aufgabe gelöst durch ein Verfahren gemäß Anspruch 13 zur Bereitstellung einer Strömungsschaltfunktion in einer Melkanlage. Das Verfahren beinhaltet die Ermittlung von Strömungsverhältnissen bei der Ableitung von Milch von einem zu melkenden Tier zu einer Milchsammelleitung und die Einstellung eines Gesamtströmungswiderstands einer Vorrichtung zur Zusammenführung von Milchströmen, wie sie zuvor beschrieben ist. Dabei erfolgt die Einstellung des Gesamtströmungswiderstands derart, dass für einen gegebenen Bereich eines Betriebsunterdrucks die Schaltfunktion der Strömungsschalteinrichtung gewährleistet ist.

Vorteilhafterweise erfolgt die Einstellung des Gesamtströmungswiderstands durch Vergrößerung des Gesamtwiderstands, wobei dies in einer Variante durch Hinzufügen eines Widerstands in oder nach dem dritten Strömungskanal erfolgt.

Wie zuvor bereits erläutert ist, wird durch die Ausbildung von Strömungskanälen in der erfindungsgemäßen Vorrichtung möglichst unter Vermeidung von unnötigen Strömungswiderständen, die etwa durch eine Umkehr in der Strömungsrichtung um 180°, durch zusätzliche Toträume, und dergleichen hervorgerufen würden, erreicht, so dass ein effizientes Ableiten von Milch, auch bei hohen Milchflüssen, gewährleistet ist. Um das gewünschte Schaltverhalten zuverlässig für einen gewünschten Bereich an Betriebsunterdruck jedoch stets gewährleisten zu können, muss gegebenenfalls der Gesamtzustand der Melkanlage berücksichtigt werden, was erfindungsgemäß dadurch erfolgt, dass der Gesamtströmungswiderstand nach Kenntnis der Strömungsbedingungen in der Melkanlage eingestellt wird. Dies kann beispielsweise durch geeignete Auswahl der Parameter für die Vorrichtung, etwa Durchmesser der Strömungskanäle, Länge der Strömungskanäle, Strömungsverhalten der Strömungsschalteinrichtung, Schalteigenschaften, etwa das Ansprechen auf Unterdruck, die Rückstellkraft für die Einleitung der Hemmung der Strömung, usw. erfolgen. Insbesondere ist in dem erfindungsgemäßen Verfahren in vorteilhaften Varianten berücksichtigt, dass der grundlegend strömungsarme Aufbau der Vorrichtung daher geeignet variiert werden kann, beispielsweise durch Vergrößerung des Gesamtströmungswiderstands, so dass eine optimale Anpassung erreicht werden kann. Dazu wird beispielsweise ein geeigneter Strömungskörper hinzugefügt und/oder insbesondere der Strömungswiderstand angepasst, indem das Strömungsverhalten einer modularen Komponente, etwa eines Auslasses, entsprechend angepasst wird.

Mit Bezug zu den begleitenden Zeichnungen werden nun die zuvor genannten Ausführungsvarianten sowie weitere Ausführungsvarianten detaillierter beschrieben. In den Zeichnungen zeigen:
Figur 1a eine schematische perspektivische Ansicht der erfindungsgemäßen Vorrichtung gemäß einer Ausführungsform;
Figur 1b eine Draufsicht der erfindungsgemäßen Vorrichtung aus Figur 1a;
Figur 1c eine Schnittansicht entsprechend den Pfeilen A aus Figur 1b;
Figur 2a eine perspektivische Ansicht der erfindungsgemäßen Vorrichtung gemäß einer Ausführungsform, in der Strömungskanäle individuell geschaltet werden können gemäß einer anschaulichen Ausführungsform;
Figur 2b eine Draufsicht der Ausführungsform der Figur 2a;
Figur 2c eine Schnittansicht der Ausführungsform entsprechend den Pfeilen A aus Figur 2b;
Figur 3a eine perspektivische Ansicht der Vorrichtung, in der eine zweite Strömungsschalteinrichtung vorgesehen ist, gemäß einer weiteren anschaulichen Ausführungsform;
Figur 3b eine Draufsicht der Ausführungsform der Figur 3a; und
Figur 3c eine Schnittansicht entsprechend dem Pfeilen D der Figur 3b.

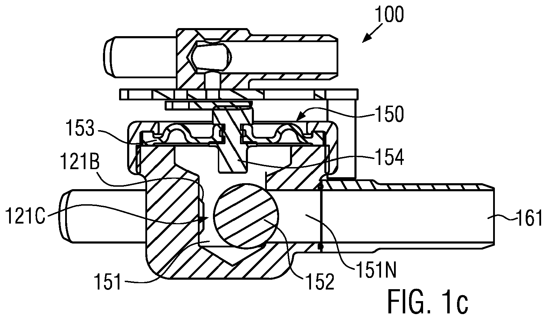

Figur 1a zeigt eine perspektivische Ansicht einer Vorrichtung zur Zusammenführung von Milchströmen 100 gemäß einer anschaulichen Ausführungsform der vorliegenden Erfindung. Die Vorrichtung 100 umfasst einen Grundkörper 110, der aus einem beliebigen geeigneten Material aufgebaut ist und eine für die Verwendung in einer Melkanlage geeignete Form aufweist. In dem Grundkörper 110 sind mehrere Strömungskanäle ausgebildet. Ein erster Strömungskanal 121A ist als Fortsetzung eines ersten Anschlusses 120A in dem Körper 110 ausgebildet, ein zweiter Strömungskanal 121B ist als Fortsetzung eines zweiten Anschlusses 120B in dem Körper 110 ausgebildet ist, und ein dritter Strömungskanal 121C (siehe Figur 1c) ist in dem Körper 110 so ausgebildet ist, dass die Strömungskanäle 121A, 121B darin zusammenlaufen, so dass insgesamt ein relativ widerstandsarmer Strömungsweg für Milch oder ein anderes Fluid gebildet wird. D.h., der erste Anschluss 120A und der zweite Anschluss 120B sind so ausgebildet, dass sie mittels eines nicht gezeigten Milchschlauches jeweils mit einem nicht gezeigten Melkbecher verbunden werden können, um somit einen Strömungsweg für einen Betriebsunterdruck und eine zu ermelkende Flüssigkeit zu bilden.

Ferner weist die Vorrichtung 100 eine Strömungsschalteinrichtung 150 auf, die in der gezeigten Ausführungsform so ausgebildet ist, dass sie druckabhängig die Strömung in dem dritten Strömungskanal 121C (siehe Figur 1c) hemmen oder freigeben kann. Eine Hemmung, d.h. eine deutliche Begrenzung eines momentanen Durchflusses ist dabei als eine Verringerung eines aktuell herrschenden Durchflusses um mehr als 90 % zu verstehen. D.h., die Strömungsschalteinrichtung 150 ist so ausgebildet, dass bei Druckausgleich oder nahezu bei Druckausgleich in Bezug auf eine Außenatmosphäre in dem dritten Strömungskanal, etwa wenn ein Lufteinbruch in dem ersten Strömungskanal 121A und/oder in dem zweiten Strömungskanal 121B erfolgt, eine Hemmung bzw. eine deutliche Reduzierung der Strömung durch den dritten Strömungskanal 121C (siehe Figur 1c) erfolgt derart, dass der gehemmte Durchfluss kleiner als 10 % und vorzugsweise kleiner als 3 % des vor dem Druckausgleich vorhandenen Durchflusses ist.

Ferner ist in der dargestellten Ausführungsform ein Auslass 160 in der Vorrichtung 100 vorgesehen, der einen geeigneten Auslassstutzen 161 aufweist, der mit einer Milchleitung zu verbinden ist, um die über die Anschlüsse 120A, 120B abgesaugte Milch mit möglichst geringem Strömungswiderstand in die Milchleitung und schließlich in einen Milchsammelbehälter zu leiten. In der gezeigten Ausführungsform ist der Anschluss 160 als ein Modul ausgebildet, das an dem Grundkörper 110 abnehmbar befestigt werden kann. Auf diese Weise lässt sich der Anschluss 160 in geeigneter Weise an eine bestehende Melkanlage anpassen, in der gegebenenfalls der Auslassstutzen 161 nicht in Verlängerung zur allgemeinen Richtung der Anschlüsse 120A, 120B verläuft, sondern beispielsweise abgewinkelt dazu orientiert ist. Ferner ermöglicht es der modulare Aufbau des Auslasses 160, für die ansonsten gleiche Vorrichtung 100 unterschiedliche Strömungseigenschaften bereitzustellen, indem beispielsweise die Länge und/oder die Querschnittsform und/oder die Größe des Querschnitts und/oder eine angewinkelte Geometrie des Anschlussstutzens 161 für eine bestehende Melkanlage geeignet ausgewählt werden. In anderen Ausführungsvarianten kann zusätzlich zu den zuvor genannten Eigenschaften des Anschlusses 160 gegebenenfalls ein Strömungswiderstand, etwa innerhalb des Stutzens 161, hinzugefügt sein, um einen Gesamtströmungswiderstand der Vorrichtung 100 in geeigneter Weise einzustellen, indem ein geeignetes Anschlussmodul 160 mit dem Grundkörper 110 verbunden wird.

Figur 1b zeigt eine Draufsicht der Vorrichtung 100 mit dem Anschluss 160.

Figur 1c zeigt eine Schnittansicht entsprechend den Pfeilen A aus Figur 1b der Vorrichtung 100. Wie gezeigt, sind der Strömungskanal 121B und entsprechend auch der nicht gezeigte unabhängig davon geführte Strömungskanal 121A so ausgebildet, dass sie in dem Strömungskanal 121C zusammenlaufen, um damit eine möglichst widerstandsarme Zusammenführung der beiden Strömungskanäle 121A, 121B zu verwirklichen, ohne unnötige Totbereiche zu schaffen, die in herkömmlichen Milchsammelstücken zu ausgeprägten Druckverlusten führen und daher in der Regel ein erhöhtes Betriebsvakuum erfordern. In der dargestellten Ausführungsform ist die Strömungsschalteinrichtung 150 in Form eines Strömungsabschnitts 151, der in dem dritten Strömungskanal 121C ausgebildet ist, in Verbindung mit einem Dichtkörper 152 und einer Membran 153 ausgebildet. Der Dichtkörper 152 ist beispielsweise als eine Kugel ausgebildet, die aus einem geeigneten Material, etwa lebensmittelverträglichen Kunststoff, usw. hergestellt ist. Der Strömungsabschnitt 151 hat geeignete Abmessungen, die einerseits unnötige Toträume vermeiden, andererseits eine gewisse Bewegungsfreiheit des beweglichen Dichtkörpers 152 so ermöglichen, dass eine ausgeprägte Hemmung der Strömung in dem Strömungskanal 121C möglich ist, andererseits aber auch eine Aufhebung der Hemmung durch Freigabe eines wesentlichen Teils des Querschnitts des Strömungskanals 121C möglich ist.

Beispielsweise führt die in der Figur 1c gezeigte Stellung des Dichtkörpers 152 zu einer Hemmung der Strömung, so dass insbesondere kein nennenswerter Lufteinbruch in einem zu dem Strömungsabschnitt 151 nachgeordneten Teil 151N des Strömungskanals 121C, d.h. in der Abbildung der Figur 1c der Abschnitt rechts von dem Dichtkörper 152, erfolgt. D.h., der Strömungskanal 121C beinhaltet den Strömungsabschnitt 151, in welchem der Dichtkörper 152 beweglich angeordnet ist, und den nachgeordneten Teil 151N, der in den Anschluss 161 mündet. Somit wird insbesondere in den Strömungskanälen 121A, 121B, wenn nahezu Druckgleichheit in Bezug auf die Außenatmosphäre herrscht, keine Saugwirkung ausgeübt. In der dargestellten Ausführungsform weist die Einrichtung 150 die Membran 153 als ein Federelement auf, die mit ihrer Außenseite mit der Außenatmosphäre in Kontakt ist, so dass die Membran 153 eine Form und eine Position einnimmt, in der sie den Dichtkörper 152 nicht berührt, wenn im Inneren des Strömungsabschnitts 151 ebenfalls im Wesentlichen der Druck der Außenatmosphäre vorherrscht. Dies wird durch die Eigenelastizität der Membran 153 bewirkt. Wenn andererseits in dem Strömungsabschnitt ein Unterdruck herrscht oder sich allmählich entwickelt, - etwa weil beim Ansetzen des Melkbechers in dem gesamten Strömungsweg, der dem Strömungsabschnitt 151 vorgeordnet ist, d.h. in Figur 1c der linke Teil, im Wesentlichen der Betriebsunterdruck vorherrscht oder sich aufbauen kann, weil der vorgeordnete Strömungsweg durch Anlegen des Melkbechers an die Zitze abgedichtet ist und ein leichtes Absaugen der Atmosphärenluft aus dem Strömungsabschnitt 151 aufgrund einer beabsichtigten nicht vollständigen Dichtigkeit des Körpers 152 entsteht, wird die Membran 153 gegen ihre Eigenelastizität nach innen gesaugt und berührt den Dichtkörper 152, beispielsweise über einen an der Membran 153 angebrachten Stößel 154, so dass der Dichtkörper 152 aus seiner strömungshemmenden Position verdrängt wird und damit den Strömungsweg freigibt. Umgekehrt kehrt die Membran 153 in ihre Ausgangsstellung zurück, wenn beispielsweise ein Lufteinbruch in einem der vorgeordneten Strömungskanäle, d.h. in dem Strömungskanal 121A und/oder 121B erfolgt, so dass der Dichtkörper 152 aufgrund der ansaugenden Wirkung, die sich aus dem nachgeordneten Teil des Strömungskanals 121C ergibt, in die Stellung gebracht wird, die in Figur 1c gezeigt ist, so dass eine entsprechende Hemmung der Strömung erfolgt.

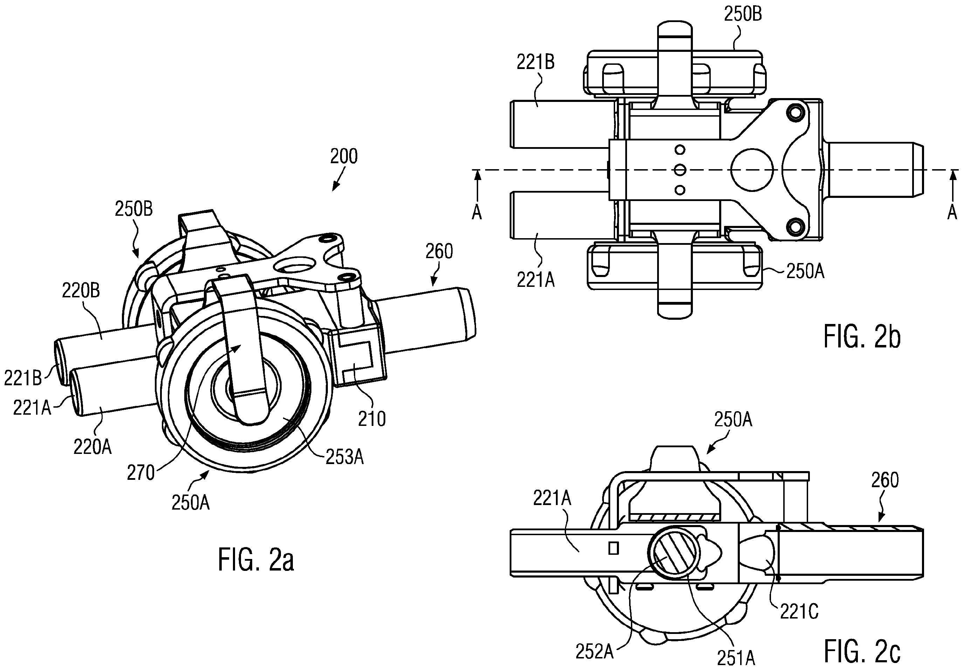

Mit Bezug zu Figur 2a bis 2c sind weitere Ausführungsbeispiele beschrieben, in denen Strömungskanäle individuell, d.h. unabhängig voneinander geschaltet werden können.

Figur 2a zeigt eine perspektivische Ansicht einer Vorrichtung 200 mit einem Grundkörper 210, in welchem ein erster und ein zweiter Strömungskanal 221A, 221B ausgebildet sind, die sich jeweils in einem ersten Anschluss 220A, 220B fortsetzen. D.h., die Anschlüsse münden in den jeweiligen Strömungskanälen. Die Anschlüsse 220A, 220B haben ähnliche Eigenschaften, wie sie bereits zuvor mit Bezug zu der Ausführungsform 100 beschrieben sind. Ferner ist ein Anschluss 260 vorgesehen, etwa als abnehmbares Modul, der mit einem dritten Strömungskanal, der in Figur 2a nicht dargestellt ist, verbunden ist. Ferner ist eine Strömungsschalteinrichtung vorgesehen, die so aufgebaut ist, dass sie die Strömung in den Kanälen 221A, 221B individuell und unabhängig schalten kann. Zu diesem Zweck sind ein erster Teil 250A der Schalteinrichtung und ein zweiter Teil 250B vorgesehen, die prinzipiell einen gleichen Aufbau haben können, so dass im Weiteren nur der Aufbau eines Teils der Strömungsschalteinrichtung beschrieben wird. Der Teil 250A der Schalteinrichtung weist in der vorliegenden Ausführungsform eine Membran 253A auf, die als Federelement dient und mit der Außenatmosphäre in Kontakt ist, wie dies bereits in ähnlicher Weise in Verbindung mit der Strömungsschalteinrichtung 150 beschrieben ist. Ferner ist in der gezeigten Ausführungsform ein mechanisches Schaltelement 270 vorgesehen, das in einer ersten Stellung keine Wirkung auf die beiden Teile 250A, 250B der Strömungsschalteinrichtung ausübt, während es in einer zweiten Schaltstufe bewirkt, dass die beiden Teile der Schalteinrichtung 250A, 250B in einer entsprechenden Schaltstellung arretiert sind und bleiben, wobei in dieser Stellung keine Hemmung der Strömung in den jeweiligen Strömungskanälen vorliegt.

Figur 2b zeigt eine Draufsicht der Vorrichtung 200 mit den beiden Teilen 250A, 250B der Strömungsschalteinrichtung für die individuelle Schaltung der zwei Strömungskanäle 221A, 221B.

Figur 2c zeigt eine Schnittansicht entsprechend dem Pfeil A aus Figur 2b. Wie gezeigt, ist in dem ersten Strömungskanal 221A ein Strömungsabschnitt 251A des Teils 250A der Strömungsschalteinrichtung ausgebildet, in welchem ein beweglicher Dichtkörper 252A angeordnet ist, der druckabhängig eine Position einnehmen kann, in welchem eine Hemmung der Strömung in dem Kanal 221A erfolgt, wenn etwa ein Druckausgleich zur Außenatmosphäre in dem vorgeordneten Bereich des Strömungskanals 221A, d.h. in dem linken Bereich in Figur 2c, erfolgt. Andererseits wird der Dichtkörper 252A von der Membran 253A (siehe Figur 2a) aus dieser Position weg gedrückt, wenn in dem vorgeordneten Bereich des Strömungskanals 221A ein Unterdruck anliegt oder entsteht, so dass durch die Bewegung der Membran 253A die Hemmung der Strömung in dem Strömungskanal 221A wieder aufgehoben wird. Die Schaltfunktion ergibt sich in ähnlicher Weise wie bei der Ausführungsform 100, die in Verbindung mit den Figuren 1 beschrieben ist.

In gleicher Weise ist der Teil 250B (siehe Figur 2b) aufgebaut und funktioniert in analoger Weise, wobei jedoch der zweite Strömungskanal 221B geschaltet wird in Abhängigkeit des darin vorherrschenden Drucks.

D.h. in der Vorrichtung 200 kann bei einem Druckausgleich, d.h., bei einem Melkbecherabfall oder bei einem noch nicht angesetzten Melkbecher, der mit beispielsweise dem Strömungskanal 221A verbunden ist, die Funktion des anderen Strömungskanals 221B nahezu unbeeinflusst aufrechterhalten werden, da dieser weiterhin mit dem Strömungskanal 221C verbunden bleibt und somit Milch ableiten und/oder den Betriebsunterdruck an der Zitze bereitstellen kann.

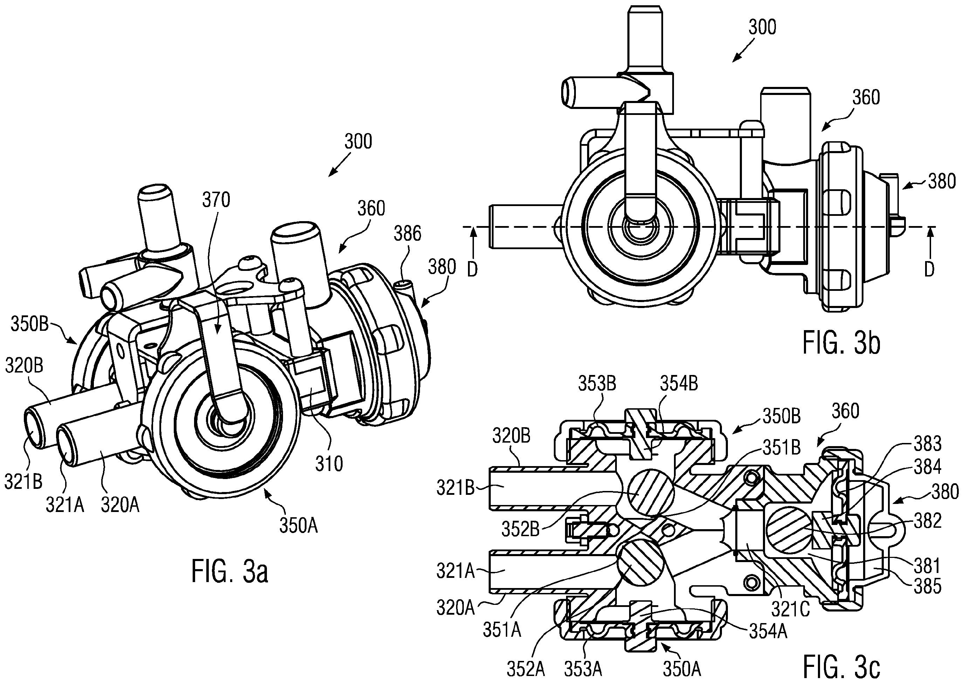

Mit Verweis auf Figur 3a bis 3c sind weitere anschauliche Ausführungsformen beschrieben, in denen ein oder mehrere Strömungskanäle geschaltet werden und gleichzeitig eine zweite Strömungsschalteinrichtung vorgesehen ist, um den dritten Strömungskanal zu schalten.

Figur 3a zeigt eine Vorrichtung 300 mit einem Grundkörper 310, in welchem mehrere Strömungskanäle 321A, 321B und 321C (siehe auch Figur 3c) so ausgebildet sind, dass die Strömungskanäle 321A, 321B in den Strömungskanal 321C münden, wie dies auch für die bereits zuvor beschriebenen Ausführungsformen der Fall ist. Ferner ist eine Strömungsschalteinrichtung vorgesehen, die in der gezeigten Ausführungsform die zwei Strömungskanäle 321A, 321B unabhängig schalten kann und diesbezüglich einen ersten Teil 350A und einen zweiten Teil 350B aufweist, die in ähnlicher Weise ausgebildet sein können, wie dies in Verbindung mit der Ausführungsform 200 zuvor beschrieben ist. In einer weiteren Ausführungsform, die nicht gezeigt ist, ist die Strömungsschalteinrichtung so ausgebildet, wie dies beispielsweise in Verbindung mit der Ausführungsform 100 erläutert ist, so dass der dritte Strömungskanal bei Lufteinbruch in einem oder beiden Strömungskanälen 321A, 321B geschaltet werden kann, wie dies auch zuvor erläutert ist. Ferner ist in der gezeigten Ausführungsform ein Schaltelement 370 vorgesehen, das die gleiche Funktion ausübt, wie dies zuvor in Verbindung mit dem Schaltelement 270 der Ausführungsform 200 erläutert ist. Die Vorrichtung 300 umfasst ferner einen Anschluss 360, der beispielsweise einen angewinkelten Ausgang zum Anschluss an eine Milchleitung darstellt und mit dem dritten Strömungskanal 321C in Verbindung steht. Auch in dieser Ausführungsform ist der Anschluss 360 als Modul ausgebildet, so dass er abnehmbar an dem Grundkörper 310 angebracht werden kann. In anderen Ausführungsvarianten (nicht gezeigt) sowie auch in Ausführungsvarianten, die in Verbindung mit den Ausführungsformen 100 und 200 beschrieben sind, kann der Anschluss 360 auch fest mit dem Grundkörper 310 verbunden sein und somit einen Bestandteil davon bilden. Des Weiteren ist eine zweite Strömungsschalteinrichtung 380 vorgesehen, die auf der Grundlage eines Steueranschlusses 386 und damit auf der Grundlage eines durch den Steueranschluss 386 zugeführten Steuersignals eine Strömung in oder nachgeordnet zu dem dritten Strömungskanal schalten kann.

Figur 3b zeigt eine Seitenansicht der Vorrichtung 300, wobei der Teil 350A der Strömungsschalteinrichtung sowie der Anschluss 360 in Verbindung mit der zweiten Strömungsschalteinrichtung 380 dargestellt sind.

Figur 3c zeigt eine Schnittansicht entsprechend dem Pfeil D aus Figur 3b. Wie gezeigt, sind die Strömungskanäle 321A, 321B, die jeweils Fortsetzungen der Anschlüsse 320A, 320B sind, - d.h., die Anschlüsse 320A, 320B münden in die jeweiligen Strömungskanäle 321A, 321B, - so in dem Grundkörper ausgebildet, dass sie in dem Strömungskanal 321C zusammenlaufen. Der Teil 350A der Strömungsschalteinrichtung ist in dem Strömungskanal 321A so ausgebildet, dass druckabhängig zwischen einer strömungshemmenden Stellung und einer nichthemmenden Stellung geschaltet werden kann. Wie gezeigt, ist der Teil 350A in Form eines Strömungsabschnitts 351A, eines beweglichen Dichtkörpers 352A, einer Membran 353A in Verbindung mit einem Stößel 354A vorgesehen, wobei die Funktion in gleicher Weise erfolgt, wie dies bereits zuvor in Verbindung mit den vorhergehenden Ausführungsformen erläutert ist.

In ähnlicher Weise ist der Teil 350B der Strömungsschalteinrichtung mit einem Strömungsabschnitt 351B in dem zweiten Strömungskanal 321B in Verbindung mit einem Dichtkörper 352B, einer Membran 353B und einem daran befestigten bzw. ausgebildeten Stößel 354B aufgebaut. Auch für diesen Teil der Strömungsschalteinrichtung gelten hinsichtlich Funktion und Eigenschaften die zuvor dargelegten Ausführungen.

Die weitere Strömungsschalteinrichtung 380 ist in der gezeigten Ausführungsform durch einen Strömungsabschnitt 381, der in dem dritten Strömungskanal 321C und/oder in einem dazu nachgeordneten Strömungsweg als Teil des Anschlusses 370 ausgebildet ist, einen beweglichen Dichtkörper 382, etwa eine Kugel, und eine Membran 383 mit einem daran angebrachten Stößel 384 ausgebildet. Die Membran 383 dient als ein Federelement und kann durch Kontakt mit dem Dichtkörper 382, etwa mittels des Stößels 384, diesen in eine erste Position bringen, in der eine Hemmung der Strömung erfolgt oder die Strömung nicht gehemmt ist, je nach Bauweise. Andererseits wird in einer zweiten Position, die zur ersten Position komplementär ist, in der der Dichtkörper 382 nicht mit Druck durch die Membran 383 beaufschlagt wird, je nach Bauweise eine nicht hemmende oder eine hemmende Position von dem Dichtkörper 382 eingenommen. Die Stellung der Membran 383 kann durch die Druckverhältnisse in einer Druckkammer 385 eingestellt werden, indem das entsprechende Steuersignal über den Anschluss 386 (siehe Figur 3a) angelegt wird. Beispielsweise wird bei Unterdruck in dem Strömungsabschnitt 381 und bei Atmosphärendruck in der Druckkammer 385 eine Verformung der Membran 383 derart erreicht, dass der Dichtkörper 382 durch Berührung mit dem Stößel 384 mit Kraft beaufschlagt wird. Wenn andererseits in dem Strömungsabschnitt 381 und in der Druckkammer 385 nahezu gleiche Druckbedingungen herrschen, z.B. Unterdruck in Bezug zu der Außenatmosphäre, kehrt die Membran 383 im Wesentlichen in ihre ursprüngliche Stellung zurück, so dass der beweglichen Dichtkörper 382 eine zweite Position einnehmen kann.

Auf diese Weise ist es möglich, in gesteuerter Weise den dritten Strömungskanal 321C zu hemmen und insbesondere eine Rückströmung von Milch oder einer anderen Flüssigkeit in den ersten und den zweiten Strömungskanal 321A, 321B im Wesentlichen zu verhindern, wenn beispielsweise noch Flüssigkeit in der mit dem Anschluss 360 verbundenen Milchleitung vorhanden ist und diese Flüssigkeit ansonsten zurückströmen würde. Dies ist insbesondere bei hochverlegten Milchleitungen eine effiziente Technik zur Verhinderung des Austritts von Milch aus der Leitung nach erfolgtem Melkvorgang. Beispielsweise sind Melkstände für Ziegen und Schafe häufig mit derartigen hochverlegten Milchleitungen versehen.

Die zuvor beschriebenen Ausführungsformen erlauben eine zuverlässige Schaltung der jeweiligen Strömungskanäle für einen Durchfluss von Flüssigkeit, unabhängig davon, ob diese gepulst oder kontinuierlich strömt, von 0 kg/min bis 6 kg/min bei einem Bereich des Betriebsunterdrucks von 30 kPa bis 55 kPa. Dazu sind die jeweiligen Abmessungen entsprechend anzupassen, wobei etwa ein Querschnitt des ersten und des zweiten Strömungskanals für alle Ausführungsformen durch einen Durchmesser von 9-15 mm gekennzeichnet ist, der Strömungsquerschnitt des dritten Strömungskanals für alle Ausführungsformen durch einen Durchmesser im Bereich von 9-15 mm gekennzeichnet ist und die Längen der jeweiligen Strömungskanäle im Bereich von 2-15 cm liegen, wobei hier für den ersten und den zweiten Strömungskanal jeweils die Länge der zugehörigen Anschlüsse enthalten sind. Beispielsweise haben die jeweiligen Kugeln 152, 252A, 352A, 352B einen Durchmesser im Bereich von 10 - 16 mm

Für eine zuverlässige Schaltfunktion für die Strömungskanäle werden die mechanischen Eigenschaften und sonstigen Eigenschaften der Strömungsschalteinrichtung so festgelegt, dass im spezifizierten Bereich des Betriebsunterdrucks für den angegebenen Bereich an Durchflüssen ein zuverlässiges Schalten bei Lufteinbruch und bei Aufhebung des Lufteinbruchs gegeben ist. Dazu können, wie bereits ausgeführt ist, die Größe und die Form des Federelements in Form der entsprechenden Membranen durch einfaches Experimentieren ermittelt werden. Beispielsweise wird in einer Ausführungsform eine Silikonmembran mit einer Dicke von 0,3 mm bis 0,8 mm einen Durchmesser von 25 mm bis 45 mm in Verbindung mit einem integral angegossenen Silikonstößel verwendet, um die Funktion des Federelements zu realisieren. Man erkennt jedoch leicht, dass bei einer anderen Materialmischung des Silikons, härter oder weicher, oder generell bei Verwendung eines anderen elastischen Materials andere geeignete Parameter auszuwählen sind, um die benötigte Federwirkung zu erhalten. Beispielsweise kann bei gegebener Form des jeweiligen Strömungsabschnitts, in welchem der bewegliche Dichtkörper vorhanden ist, eine geeignete Form und/oder Materialmischung und/oder Materialdicke und/oder Größe der Membran ermittelt werden, indem die geforderten Betriebsbedingungen eingestellt werden, und die Schaltfunktion für unterschiedliche Parameter getestet wird. In anschaulichen Varianten lassen sich die Federelemente so herstellen, dass unterschiedliche Bereiche des Betriebsunterdrucks abgedeckt werden, etwa Bereiche von 30 kPa bis 40 kPa, von 36 kPa bis 48 kPa, von 38 kPa bis 50 kPa, von 40 kPa bis 55 kPa.

Es ist anzumerken, dass die in dieser Beschreibung genannten Bedingungen für den Betriebsunterdruck und den Durchfluss problemlos unter Anwendung üblicher Messgeräte, die für Druckmessung und für die Messung eines Durchflusses oder für eine zeitaufgelöste Mengenmessung geeignet sind, ermittelt werden können. Die angegebenen Parameter gelten insbesondere auch für den Durchfluss von Wasser als das abzuleitende Medium, wobei die Temperatur des Wassers im Bereich von 8 °C bis 25 °C liegen sollte.

Ferner kann jede der zuvor beschriebenen Ausführungsformen in effizienter Weise an gegebene Betriebsbedingungen und eine gegebene Anlagengeometrie angepasst werden, indem zunächst die Strömungsverhältnisse in einer gegebenen Melkanlage bestimmt werden, etwa indem ein Testbetrieb mit einer erfindungsgemäßen Vorrichtung mit minimalem Strömungswiderstand durchgeführt wird und deren Schaltverhalten ermittelt wird und anschließend auf der Grundlage der Ergebnisse eine Einstellung des Strömungswiderstands der erfindungsgemäßen Vorrichtung vorgenommen wird. Beispielsweise wird dazu eine Anpassung des Gesamtströmungswiderstands vorgenommen, etwa durch die Anpassung eines Strömungswiderstands einer oder mehrerer Komponenten der Vorrichtung, etwa eines Moduls mit einem Anschluss, und dergleichen, wie zuvor bereits erläutert ist. Auf diese Weise kann ein gleichartiger Grundkörper mit den darin ausgebildeten Strömungskanälen sowie der Strömungsschalteinrichtung in Verbindung mit unterschiedlichen Modulen zur Anpassung des Gesamtströmungswiderstands verwendet werden, so dass ein für die in Rede stehende Melkanlage optimales Ergebnis erhalten wird.

Die in den Ausführungsformen dargestellten Anordnungen mit zwei Anschlüssen für Melkbecher sind vorteilhaft für das Melken von Tieren mit zwei Zitzen. Jedoch ist die vorliegende Erfindung nicht darauf beschränkt und in anderen Ausführungsvarianten können etwa zwei derartige Vorrichtungen kombiniert werden, beispielsweise indem der Grundkörper entsprechend vergrößert wird, um eine größere Anzahl an Strömungskanälen aufzunehmen, die letztlich in einem einzigen Ausgangsströmungskanal zusammenlaufen. Auch hier ist es möglich, eine Strömungsschalteinrichtung vorzusehen, die lediglich den letzten Strömungskanal schaltet oder es kann eine Strömungsschalteinrichtung vorgesehen werden, in der die einzelnen Strömungskanäle, die mit den jeweiligen Melkbechern zu verbinden sind, individuell geschaltet werden können.

Die vorliegende Erfindung stellt somit ein modulares System zur druckabhängigen Hemmung des Milchflusses bereit. Durch das modulare Konzept lassen sich in effizienter Weise die benötigten Eigenschaften der Vorrichtung einstellen. Beispielsweise ist es möglich, die Anbindung an eine Milchleitung, d.h., die Geometrie der Anschlussanordnung, gezielt an die bestehenden Gegebenheiten des Melkplatzes und der Melkanlage anpassen. Die druckabhängige Hemmung beim Melken kann gezielt für eine einzelne Zitze oder paarweise für zwei Zitzen durch Verwendung einer entsprechenden Modulkomponente eingestellt werden. Bei Bedarf kann eine Anpassung des Bereichs für das zuverlässige Schalten durch Auswahl geeigneter Federkomponenten und/oder durch Anpassung des Strömungswiderstands erfolgen. Der Strömungswiderstand ist dabei durch Verwendung einer geeigneten Anschlussanordnung und/oder durch Austausch eines modularen Strömungskörpers einstellbar.

## Patentansprüche

1. Vorrichtung zur Zusammenführung von Milchströmen mit
einem Grundkörper (110; 210; 310) mit mehreren darin ausgebildeten Strömungskanälen (121A, 121B, 121C; 221A, 221B, 221C; 321A, 321B, 321C), wobei ein erster Strömungskanal (121A; 221A; 321A) und ein zweiter Strömungskanal (121B; 221B; 321B) unabhängig voneinander geführt sind, und ein dritter Strömungskanal (121C; 221C; 321C) vorgesehen ist, in welchem der erste Strömungskanal (121A; 221A; 321A) und der zweite Strömungskanal (121B; 221B; 321B) unter Vermeidung einer Umkehr der Strömungsrichtung um 180° und eines Totraumes zusammenlaufen,
einem an dem Grundkörper (110; 210; 310) ausgebildeten ersten Anschluss (120A; 220A; 320A), der mit einer Milchleitung eines ersten Melkbechers zu verbinden ist und in den ersten Strömungskanal (121A; 221A; 321A) mündet,
einem an dem Grundkörper (110; 210; 310) ausgebildeten zweiten Anschluss (120B; 220B; 320B), der mit einer Milchleitung eines zweiten Melkbechers zu verbinden ist und in den zweiten Strömungskanal (121B; 221B; 321B) mündet, und
einer Strömungsschalteinrichtung (150; 250A, 250B; 350A, 350B), die ausgebildet ist, mindestens einen Strömungskanal der mehreren Strömungskanäle (121A, 121B, 121C; 221A, 221B, 221C; 321A, 321B, 321C) druckabhängig zu schalten, indem bei einem vorgegebenen Bereich eines Betriebsunterdrucks, der an dem dritten Strömungskanal (121C; 221C; 321C) anliegt, bei Auftreten eines Druckausgleichs in Bezug zur Außenatmosphäre in dem mindestens einen Strömungskanal die Strömung darin gehemmt und bei Ausbildung eines Unterdrucks, der in dem vorgegebenen Bereich liegt, die Hemmung der Strömung aufgehoben wird.

2. Vorrichtung zur Zusammenführung von Milchströmen nach Anspruch 1, wobei die Strömungsschalteinrichtung (150) ausgebildet ist, den dritten Strömungskanal (121C; 221C; 321C) druckabhängig zu schalten, oder
wobei die Strömungsschalteinrichtung (250A, 250B; 350A, 350B) ausgebildet ist, den ersten und den zweiten Strömungskanal jeweils druckabhängig und unabhängig voneinander zu schalten.

3. Vorrichtung zur Zusammenführung von Milchströmen nach einem der vorhergehenden Ansprüche, wobei die Strömungsschalteinrichtung einen Strömungsabschnitt (151; 251A; 351A) und einen darin beweglich angeordneten Dichtkörper (152; 252A; 352A), insbesondere in Form einer Kugel, in dem mindestens einen Strömungskanal aufweist.

4. Vorrichtung zur Zusammenführung von Milchströmen nach einem der vorhergehenden Ansprüche, wobei die Strömungsschalteinrichtung ein auf den Druck in dem mindestens einen Strömungskanal reagierendes Federelement (153; 253A; 353A), insbesondere eine mit der Außenatmosphäre in Kontakt stehende Membran, aufweist, das zumindest bei Druckausgleich mit dem Dichtkörper (152; 252A; 352A) in Kontakt tritt.

5. Vorrichtung zur Zusammenführung von Milchströmen nach einem der vorhergehenden Ansprüche, wobei der Bereich des Betriebsunterdrucks 30 kPa bis 55 kPa beträgt, und/oder die Strömungsschalteinrichtung so ausgebildet ist, dass ihre Schaltfunktion bei einem Durchfluss an Flüssigkeit in dem mindestens einen Strömungskanal im Bereich von 0 kg/Min. bis 6 kg/Min. ausführbar ist.

6. Vorrichtung zur Zusammenführung von Milchströmen nach einem der vorhergehenden Ansprüche, die ferner eine zweite Strömungsschalteinrichtung (380) aufweist, die ausgebildet ist, den dritten Strömungskanal (321C) der mehreren Strömungskanäle zu schalten, indem bei einem ersten Zustand eines anliegenden Steuersignals die Strömung darin gehemmt und bei einem zweiten Zustand des anliegenden Steuersignals die Hemmung der Strömung aufgehoben wird.

7. Vorrichtung zur Zusammenführung von Milchströmen nach dem vorhergehenden Anspruch, wobei die zweite Strömungsschalteinrichtung (380) einen Strömungsabschnitt (381) und einen darin beweglich angeordneten Dichtkörper (382), insbesondere in Form einer Kugel, in oder nach dem dritten Strömungskanal (321C) aufweist.

8. Vorrichtung zur Zusammenführung von Milchströmen nach Anspruch 7, wobei die zweite Strömungsschalteinrichtung (380) ein Federelement (383), insbesondere in Form einer Membran, aufweist, das mit dem Dichtkörper (382) bei Anliegen entweder des ersten Zustands oder des zweiten Zustands des Steuersignals in Kontakt tritt und bei Anliegen des anderen Zustands in seinen Ausgangszustand zurückkehrt.

9. Vorrichtung zur Zusammenführung von Milchströmen nach einem der Ansprüche 6 bis 8, wobei das Steuersignal durch Einstellung eines Drucks in einer Druckkammer (385) der zweiten Strömungsschalteinrichtung (380) erzeugt ist.

10. Vorrichtung zur Zusammenführung von Milchströmen nach einem der vorhergehenden Ansprüche, die ferner ein Schaltelement (270; 370) aufweist, das ausgebildet ist, bei Betätigung die Schaltfunktion der Strömungsschalteinrichtung ohne Hemmung der Strömung zu blockieren.

11. Vorrichtung zur Zusammenführung von Milchströmen nach einem der vorhergehenden Ansprüche, die ferner einen Auslass (160; 260; 360) zur Ankopplung einer Milchleitung aufweist, wobei der Auslass als Modul, insbesondere als Modul in Varianten mit unterschiedlichen Strömungswiderständen und/oder als Modul in Varianten mit unterschiedlicher Anschlussgeometrie, ausgebildet ist, das mit dem Grundkörper so verbindbar ist, dass eine Strömungsverbindung zwischen dem dritten Strömungskanal und dem Auslass hergestellt wird.

12. Vorrichtung zur Zusammenführung von Milchströmen nach einem der vorhergehenden Ansprüche, wobei der Auslass (160; 260; 360) und/oder der erste Strömungskanal (121A; 221A; 321A) und/oder der zweite Strömungskanal (121B; 221B; 321B) und/oder der dritte Strömungskanal (121C; 221C; 321C) ausgebildet sind, einen modularen Strömungskörper zur Einstellung des Strömungswiderstands aufzunehmen, und/oder das Federelement als modulare Einheit zur Einstellung eines gewünschten Bereichs eines Betriebsunterdrucks ausgebildet ist.

13. Verfahren zur Bereitstellung einer Strömungsschaltfunktion in einer Melkanlage, mit
Bestimmen von Strömungsverhältnissen bei der Ableitung von Milch von einem zu melkenden Tier zu einer Milchsammelleitung, und
Einstellen eines Gesamtströmungswiderstands einer Vorrichtung zur Zusammenführung von Milchströmen nach einem der Ansprüche 1 bis 12 derart, dass für einen gegebenen Bereich eines Betriebsunterdrucks die Schaltfunktion der Strömungsschalteinrichtung gewährleistet wird.

14. Verfahren nach Anspruch 13, wobei Einstellen eines Gesamtströmungswiderstands Vergrößern des Gesamtwiderstands, insbesondere durch Hinzufügen eines Widerstands in oder nach dem dritten Strömungskanal, umfasst.

15. Verfahren nach Anspruch 13 oder 14, das ferner umfasst: Einstellen eines Schaltbereichs der Strömungsschalteinrichtung für einen gewünschten Bereich eines Betriebsunterdrucks durch Auswahl eines dafür geeigneten Federelements, und/oder
Anpassen einer Anschlussgeometrie durch Auswahl eines für die gewünschte Anschlussgeometrie geeigneten Anschlussmoduls.

## Claims

1. An apparatus for combining milk flows comprising:
a base body (110; 210; 310) having a plurality of flow channels (121A, 121B, 121C; 221A, 221B, 221C; 321A, 321B, 321C) formed therein, wherein a first flow channel (121A; 221A; 321A) and a second flow channel (121B; 221B; 321B) are routed independently of each other, and a third flow channel (121C; 221C; 321C) is provided, in which the first flow channel (121A; 221A; 321A) and the second flow channel (121B; 221B; 321B) converge while avoiding a reversal of the flow direction by 180° and formation of a wake space,
a first connector (120A; 220A, 320A) formed on the base body (110; 210; 310) which is to be connected to a milk line of a first teat cup and opens into the first flow channel (121A; 221A; 321A),
a second connector (120B; 220B, 320B) formed on the base body (110; 210; 310) which is to be connected to a milk line of a second teat cup and opens into the second flow channel (121B; 221B; 321B), and
a flow switching device (150; 250A, 250B; 350A, 350B) configured for pressure-dependent switching of at least one flow channel of said plurality of flow channels (121A, 121B, 121C; 221A, 221B, 221C; 321A, 321B, 321C) by inhibiting the flow therein in a predetermined range of an negative operating pressure applied to said third flow channel (121C; 221C; 321C),when a equalization of pressure with respect to the outside atmosphere in the at least one flow channel occurs, and cancelling the inhibition of the flow upon the formation of a negative pressure which is within the predetermined range.

2. The apparatus for combining milk flows according to claim 1, wherein the flow switching device (150) is configured for pressure-dependent switching of the third flow channel (121C; 221C; 321C), or
wherein the flow switching device (250A, 250B; 350A, 350B) is configured for Independent pressure-dependent switching of the first and the second flow channels.

3. The apparatus for combining milk flows according to any one of the preceding claims, wherein the flow switching device includes a flow section (151; 251A; 351A) and a sealing body (152; 252A; 352A) movably arranged therein, in particular in the form of a sphere, in the at least one flow channel.

4. The apparatus for combining milk flows according to any one of the preceding claims, wherein the flow switching device includes a spring element (153; 253A; 353A) which responds to the pressure in the at least one flow channel, in particular a diaphragm in contact with the external atmosphere, which comes into contact with the sealing body (152; 252A; 352A) at least when equalization of pressure occurs.

5. The apparatus for combining milk flows according to any one of the preceding claims, wherein the range of the negative operating pressure is 30 kPa to 55 kPa, and/or the flow switching device is configured such that its switching function can be performed at a flow rate of liquid in the at least one flow channel in the range from 0 kg/min to 6 kg/min.

6. The apparatus for combining milk flows according to any one of the preceding claims, further including a second flow switching device (380) configured to switch the third flow channel (321C) of the plurality of flow channels by inhibiting flow therein in a first state of an applied control signal and by releasing inhibition of flow therein in a second state of the applied control signal.

7. The apparatus for combining milk flows according to the preceding claim, wherein the second flow switching device (380) has a flow section (381) and a sealing body (382) movably arranged therein, in particular in the form of a sphere, in the third flow channel (321C) or downstream thereof.

8. The apparatus for combining milk flows according to claim 7, wherein the second flow switching device (380) includes a spring element (383), in particular in the form of a diaphragm, which comes into contact with the sealing body (382) when the control signal in either the first state or the second state thereof is applied and returns to its initial state when it is applied in the respective other state thereof.

9. The apparatus for combining milk flows according to any one of claims 6 to 8, wherein the control signal is generated by adjusting a pressure in a pressure chamber (385) of the second flow switching device (380).

10. The apparatus for combining milk flows according to any one of the preceding claims, further including a switching element (270; 370) which, when actuated, is configured to block the switching function of the flow switching device without inhibiting the flow.

11. The apparatus for combining milk flows according to any one of the preceding claims, further including an outlet (160; 260; 360) for coupling a milk line, wherein the outlet is configured as a module, in particular as a module in variants with different flow resistances and/or as a module in variants with different connection geometries connectable to the base body in such a way that a flow connection is established between the third flow channel and the outlet.

12. The apparatus for combining milk flows according to any one of the preceding claims, wherein the outlet (160; 260; 360) and/or the first flow channel (121A; 221 A; 321A) and/or the second flow channel (121B; 221B; 321B) and/or the third flow channel (121C; 221C; 321C) are configured to receive a modular flow body for adjusting the flow resistance, and/or the spring element is configured as a modular unit for adjusting a desired range of an negative operating pressure.

13. A method for providing a flow switching function in a milking plant comprising the following steps:
determining flow conditions in the discharge of milk from an animal to be milked to a milk collection line, and
adjusting a total flow resistance of an apparatus for combining milk flows according to any one of claims 1 to 12 in such a way that, for a given range of an negative operating pressure, the switching function of the flow switching device is ensured.

14. The method according to claim 13, wherein adjusting a total flow resistance comprises increasing the total resistance, in particular by adding a resistance in the third flow channel or downstream thereof.

15. The method according to claims 13 or 14 comprising the further steps of:
setting a switching range of the flow switching device for a desired range of an negative operating pressure by selecting a spring element suitable therefor, and/or
adapting a connection geometry by selecting a connection module suitable for the desired connection geometry.

## Revendications

1. Dispositif pour réunir des écoulements de lait comprenant
un corps de base (110 ; 210 ; 310) avec plusieurs canaux d'écoulement (121A, 121B, 121C ; 221A, 221B, 221C ; 321A, 321B, 321C) formés dans celui-ci, un premier canal d'écoulement (121A ; 221A ; 321A) et un deuxième canal d'écoulement (121B ; 221B ; 321B) étant guidés indépendamment l'un de l'autre, et un troisième canal d'écoulement (121C ; 221C ; 321C) étant prévu, dans lequel le premier canal d'écoulement (121A ; 221A ; 321A) et le deuxième canal d'écoulement (121B ; 221B ; 321B) convergent en évitant une inversion de la direction d'écoulement de 180° et un espace mort,
un premier raccord (120A; 220A) formé sur le corps de base (110 ; 210 ; 310), qui doit être relié à une conduite de lait d'un premier gobelet trayeur et qui débouche dans le premier canal d'écoulement (121A ; 221A ; 321A),
un second raccord (120B ; 220B) formé sur le corps de base (110 ; 210 ; 310) qui doit être relié à une conduite de lait d'un second gobelet trayeur et qui débouche dans le deuxième canal d'écoulement (121B ; 221B ; 321B), et
un dispositif de commutation d'écoulement (150 ; 250A, 250B ; 350A, 350B) qui est conçu pour commuter au moins un canal d'écoulement des plusieurs canaux d'écoulement (121A, 121B, 121C; 221A, 221B, 221C ; 321A, 321B, 3210) en fonction de la pression, en inhibant l'écoulement dans une plage prédéterminée d'une dépression de fonctionnement, qui est appliquée au troisième canal d'écoulement (121C ; 221C; 321C), lors de l'apparition d'une compensation de pression par rapport à l'atmosphère extérieure dans le au moins un canal d'écoulement, et en supprimant l'inhibition de l'écoulement lors de la formation d'une dépression qui se trouve dans la plage prédéterminée.

2. Dispositif pour réunir des écoulements de lait selon la revendication 1, dans lequel le dispositif de commutation d'écoulement (150) est conçu pour commuter le troisième canal d'écoulement (121C ; 221C ; 321C) en fonction de la pression, ou
dans lequel le dispositif de commutation d'écoulement (250A, 250B ; 350A, 350B) est conçu pour commuter les premier et deuxième canaux d'écoulement en fonction de la pression et indépendamment l'un de l'autre.

3. Dispositif pour réunir des écoulements de lait selon l'une quelconque des revendications précédentes, dans lequel le dispositif de commutation d'écoulement comprend une section d'écoulement (151 ; 251A; 351A) et un corps d'étanchéité (152 ; 252A ; 352A) agencé de manière mobile dans celle-ci, en particulier sous la forme d'une bille, dans le au moins un canal d'écoulement.

4. Dispositif pour réunir des écoulements de lait selon l'une quelconque des revendications précédentes, dans lequel le dispositif de commutation d'écoulement comprend un élément à ressort (153 ; 253A ; 353A) réagissant à la pression dans le au moins un canal d'écoulement, en particulier une membrane en contact avec l'atmosphère extérieure, qui vient en contact avec le corps d'étanchéité (152 ; 252A ; 352A) au moins en cas de compensation de pression.

5. Dispositif pour réunir des écoulements de lait selon l'une quelconque des revendications précédentes, dans lequel la plage de dépression de fonctionnement est de 30 kPa à 55 kPa, et/ou le dispositif de commutation d'écoulement est conçu de telle sorte que sa fonction de commutation peut être exécutée dans le cas d'un débit de liquide dans le au moins un canal d'écoulement dans la plage de 0 kg/min à 6 kg/min.

6. Dispositif pour réunir des écoulements de lait selon l'une quelconque des revendications précédentes, comprenant en outre un second dispositif de commutation d'écoulement (380) qui est conçu pour commuter le troisième canal d'écoulement (321C) de la pluralité de canaux d'écoulement en inhibant l'écoulement dans un premier état d'un signal de commande appliqué et en supprimant l'inhibition de l'écoulement dans un second état du signal de commande appliqué.

7. Dispositif pour réunir des écoulements de lait selon la revendication précédente, dans lequel le second dispositif de commutation d'écoulement (380) présente une section d'écoulement (381) et un corps d'étanchéité (382) agencé de manière mobile dans celle-ci, en particulier sous la forme d'une bille, dans ou après le troisième canal d'écoulement (321C).

8. Dispositif pour réunir des écoulements de lait selon la revendication 7, dans lequel le second dispositif de commutation d'écoulement (380) présente un élément à ressort (383), en particulier sous la forme d'une membrane, qui vient en contact avec le corps d'étanchéité (382) lorsque le premier état ou le second état du signal de commande est appliqué et revient à son état initial lorsque l'autre état est appliqué.

9. Dispositif pour réunir des écoulements de lait selon l'une quelconque des revendications 6 à 8, dans lequel le signal de commande est généré en ajustant une pression dans une chambre de pression (385) du second dispositif de commutation d'écoulement (380).

10. Dispositif pour réunir des écoulements de lait selon l'une quelconque des revendications précédentes, comprenant en outre un élément de commutation (270 ; 370) qui est conçu pour bloquer la fonction de commutation du dispositif de commutation d'écoulement sans inhiber l'écoulement lorsqu'il est actionné.

11. Dispositif pour réunir des écoulements de lait selon l'une quelconque des revendications précédentes, qui comprend en outre une sortie (160 ; 260 ; 360) pour le couplage d'une conduite de lait, dans lequel la sortie est réalisée sous la forme d'un module, en particulier sous la forme d'un module dans des variantes avec différentes résistances d'écoulement et/ou sous la forme d'un module dans des variantes avec différentes géométries de raccordement, qui peut être raccordé au corps de base de manière à établir une liaison d'écoulement entre le troisième canal d'écoulement et la sortie.

12. Dispositif pour réunir des écoulements de lait selon l'une quelconque des revendications précédentes, dans lequel la sortie (160 ; 260 ; 360) et/ou le premier canal d'écoulement (121A ; 221A ; 321A) et/ou le deuxième canal d'écoulement (121B ; 221B ; 321B) et/ou le troisième canal d'écoulement (121C ; 221C; 321C) sont conçus pour recevoir un corps d'écoulement modulaire pour l'ajustement de la résistance à l'écoulement, et/ou l'élément à ressort est conçu sous la forme d'une unité modulaire pour l'ajustement d'une plage souhaitée d'une dépression de fonctionnement.

13. Procédé pour fournir une fonction de commutation d'écoulement dans une installation de traite, comprenant les étapes consistant à
déterminer des conditions d'écoulement lors du transfert du lait d'un animal à traire vers un collecteur de lait, et
ajuster une résistance à l'écoulement totale d'un dispositif pour réunir des écoulement de lait selon l'une quelconque des revendications 1 à 12 de manière à garantir la fonction de commutation du dispositif de commutation d'écoulement pour une plage donnée de dépression de fonctionnement.

14. Procédé selon la revendication 13, dans lequel l'ajustement d'une résistance à l'écoulement totale comprend l'augmentation de la résistance totale, notamment en ajoutant une résistance dans ou après le troisième canal d'écoulement.

15. Procédé selon la revendication 13 ou 14, comprenant en outre les étapes consistant à : ajuster une plage de commutation du dispositif de commutation d'écoulement pour une plage souhaitée de dépression de fonctionnement en sélectionnant un élément à ressort approprié, et/ou
adapter une géométrie de raccordement en sélectionnant un module de raccordement adapté à la géométrie de raccordement souhaitée.
